Europäisches Patentamt

European Patent Office

Office européen des brevets

(11) Veröffentlichungsnummer: **0 158 182**
A2

# (12) EUROPÄISCHE PATENTANMELDUNG

(21) Anmeldenummer: 85103263.1

(22) Anmeldetag: 20.03.85

(51) Int. Cl.⁴: **B 23 Q 5/04**
**B 23 B 39/20**

(30) Priorität: 23.03.84 IT 2020484

(43) Veröffentlichungstag der Anmeldung:
16.10.85 Patentblatt 85/42

(84) Benannte Vertragsstaaten:
AT CH DE FR GB LI SE

(71) Anmelder: D'Andrea S.p.A.
Corso Europa 18
I-20020 Lainate(IT)

(72) Erfinder: d'Andrea, Nicola
Corso Europa 18
I-20020 Lainate(IT)

(72) Erfinder: d'Andrea, Ermanno
Corso Europa 18
I-20020 Lainate(IT)

(74) Vertreter: Mayer, Hans Benno
Via dell'Orso 7/A
I-20121 Milano(IT)

(54) Fraes - und Bohrkopf fuer eine Werkzeugmaschine.

(57) Fraes- und Bohrkopf fuer eine Werkzeugmaschine, mit einer antriebsspindel, die in einem fest angeordneten Gehaeuse untergebracht ist, sowie mit einem Antriebsmittel, das mit einem Zahnkranz wirkverbunden ist, der mit einem beweglich angeordneten Gehaeuseteils zusammenwirkt und wenigstens eine Werkzeugspindel aufnimmt, die ueber die Hauptspindel antreibbar ist und im Winkel zur Achse (X) der Hauptspindel angeordnet ist.

FIG 1

EP 0 158 182 A2

Akte No. 03-229

D'Andrea S.p.A.

Lainate (Italien)

Corso Europa 18

"Fraes- und Bohrkopf fuer eine Werkzeugmaschine"

Die vorstehende Erfindung betrifft einen Fraes- und Bohrkopf fuer eine Werkzeugmaschine, hautpsaechlich fuer Fraesmaschinen oder numerisch gesteuerte Bearbeitungszentren, die mit Werkzeugmagazinen ausgeruestet sind, die verschiedene Werkzeuge aufnehmen.

In Maschinen dieser Art wird die Aufnahmespindel fuer das Werkzeug meistens ueber eine bekannte NC-Einheit gesteuert und, entsprechend den durchzufuehrenden Arbeitsgaengen, werden mit einer an sich bekannnten Vorrichtung, die fuer den entsprechenden spanabhebenden Arbeitsvorgang notwendigen Werkzeuge aus einem Magazin entnommen.

Der groesste Vorteil dieser modernen Werkzeugmaschine ist darin zu sehen, dass das nur einmal auf einer Plattform aufzuspannende Werkstuecke einer unbegrenzten Anzahl von Bearbeitsvorgaengen unterzogen werden kann. Diese Arbeitsvorgaenge erfolgen automatisch unter Einsatz der verschiedensten Werkzeuge, stets unter der direkten Kontrolle der NC-Einheit und ohne die Notwendigkeit eines Eingreifens des Bedienungsmannes der Maschine.

Waehrend in den bekannten Maschinen ein Grossteil der spanabhebenden Bearbeitungsvorgaenge in zufriedenstellender Weise mit einer einzigen Aufspannung des Werkstueckes auf der Plattform durchfuehrbar ist, ist es bisher nicht moeglich gewesen, in diesen Maschinen unter Einsatz der herkoemmlichen Werkzeuge und unter Einsatz einer NC-Steuereinheit Arbeitsgaenge durchzufuehren, die z.B. eine beliebige Aenderung des Anstellwinkels des verwendeten Werkzeuges gegenueber der Achse (X) der Hauptspindel erforderte.

Arbeitsvorgaenge dieser Art treten jedoch haeufig auf, z.B. um Bohrungen oder Gewindeschnitte mit unterschiedlicher Winkellage in zylinderfoermige Koerper die koaxial zur Achse (X) der Spindel liegen, durchzufuehren oder um umlaufende Nuten am Aussenmantel oder im Inneren dieser zylinderfoermigen Werkstuecke herzustellen oder um beispielsweise "S"-foermige Nuten einzuarbeiten, um Schmiernuten fuer drehbar gelagerte Wellen oder aehnliche Maschinenbauteile zu schaffen.

Zur Durchfuehrung dieser Bearbeitungsvorgaenge war es stets erforderlich, das Werkstueck mechanischen Bearbeitungen in nachfolgenden spanabhebenden Werkzeugmaschinen durchzufuehren; hiermit sank einmal die Genauigkeit in der Bearbeitung, die Fertigungskosten stiegen an, teilweise waren Spezialwerkzeugmaschinen einzusetzen und haeufig mussten Spezialwerkzeuge und besondere Vorrichtungen eingesetzt werden, die bekanntlich teuer in ihrer Anschaffung sind.

Aufgabe der vorstehenden Erfindung ist es ein, einen neuen Fraes- und Bohrkopf fuer eine NC-gesteuerte Werkzeugmaschine vorzuschlagen, die mit einem Magazin zur Aufnahme der Werzeuge ausgeruestet ist und in der Lage ist, die vorher genannten Bearbeitungsvorgaenge ohne Zuhilfenahme besonderer Werkzeuge und vor allem in ein und derselben Maschine auszufuehren, die auch die anderen herkoemmlichen Bearbeitungsvorgaenge durchfuehrt.

Diese Aufgabe wird erfindungsgemaess dadurch geloest, dass eine fest angeordnete erste Haefte des Gehaeuses des Fraes- und Bohrkopfes eine Antriebsspindel aufweist, die mit der Spindel der Werkzeugmaschine verbindbar ist, dass sich das Endstueck der Antriebsspindel in ein zweites Gehaeuseteil verlaengert, das verdrehbar gegenueber dem ersten, fest angeordneten Gehaeusesteil vorgesehen ist, dass genannte Spindel ueber Kegelraeder mit einer oder mehreren Werkzeugaufnahmespindeln in Wirkverbindung steht, die im Winkel verdrehbar gegenueber der Achse (X) der Hauptspindel angeordnet sind, dass ferner das drehbar angeordnete Gehaeuseteil mit einem Antriebsrad wirkverbunden ist, das ueber eine Zwischenwelle mit einer Steuerwelle wirkverbunden ist, die unter Zwischenschaltung eines Kupplungs- und Antriebsstueckes ueber die NC-Einheit der Werkzeugmaschine antreibbar ist.

Weitere Vorteile der Erfindung koennen der nun folgenden Beschreibung, den Unteranspruechen, sowie den beigefuegten Zeichnungen entnommen werden.

Der Erfindungsgegenstand wird nun anhand eines Ausfuehrungsbeispieles genauer beschrieben und in den beigefuegten Zeichnungen dargestellt.

Es zeigen:

Fig. 1 den Fraes- und Bohrkopf im Laengsschnitt;

Fig. 2 den Fraes- und Bohrkopf im Schnitt laengs der Line II-II der Fig. 1; und

Fig. 3 schematisch zwei Ausfuehrungsformen des erfindungsgemaessen Fraes- und Bohrkopfes, zusammen mit einer Werkzeugmaschine zur Aufnahme dieser Werkzeuge.

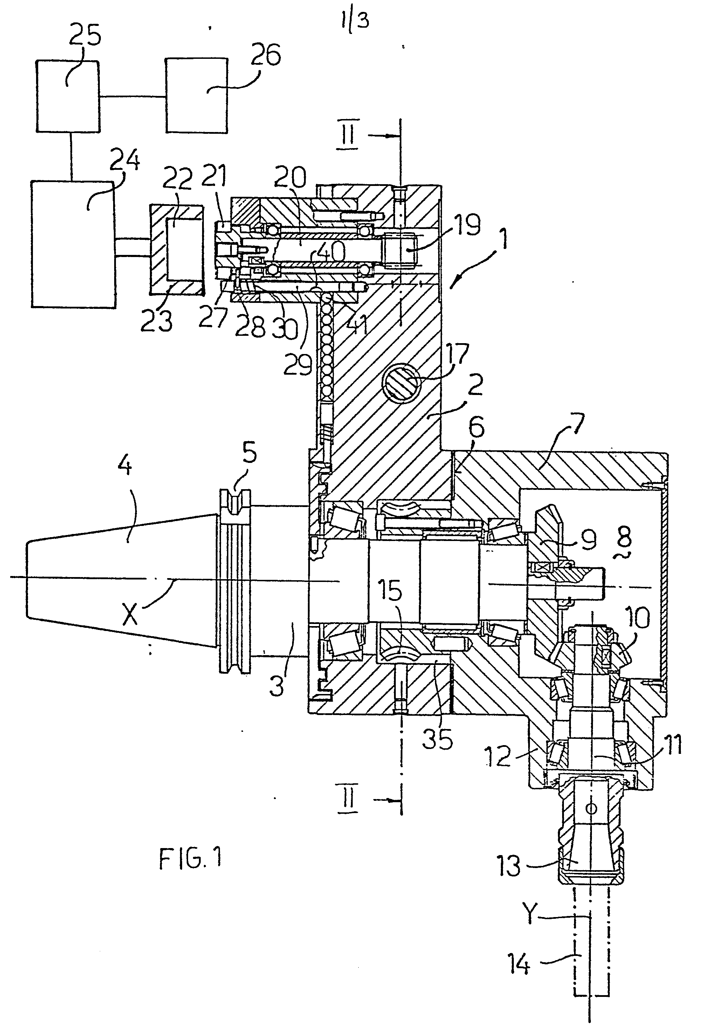

Wie der Fig. 1 zu entnehmen ist, weist der gesamthaft mit 1 gekennzeichnete Fraes- und Bohrkopf ein erstes feststehendes Gehaeuseteil 2 auf, in welchem unter Verwendung bekannter Kugellager, eine Antriebswelle 3 gelagert ist. Diese Antriebswelle 3 weist auf einer Seite einen bekannten Konus 4 auf und fuer den Eingriff bekannter Vorrichtungen zum Auswechseln der Werkzeuge, ist z.B. ein Kragen 5 vorgesehen, wodurch der Konus 4 in den konischen Sitz einer nicht dargestellten Werkmaschinenspindel eingesetzt und blockiert werden kann.

Unter Zwischenfuegung einer Gleitplatte 6, die z.B. aus einem Lagermetall besteht, das z.B. unter dem Handelsnamen "Turcite" bekannt geworden ist, ist mit einem feststehenden Teil 2 des Gehaeuses ein zweites Gehaeuseteil 7 wirkverbunden, das drehbar um die Achse (X) der Welle 3 angeordnet ist. Das Ende der Welle 3, das dem Konus 4 entgegengesetzt angeordnet ist, ragt in eine Kammer 8 des drehbaren Gehaeuseteiles 7, in der das Endstueck der Antriebswelle 3 mit einem Kegelzahnrad 9 verbunden ist, welches in diesem Fall mit einem Kegelzahnrad 10 kaemmt, welches fest auf der Welle 11 angeordnet ist und unter Zuhilfenahme bekannter Lager in einem radialen Bund 12 des drehbaren Gehaeuseteiles 7 angeordnet ist.

In Fig. 1 ist die Achse Y der Welle 11 senkrecht zur Achse X der Antriebswelle 3 angeordnet, doch koennen selbstverstaendlich auch andere Winkel vorgesehen sein.

Die Welle 11 weist an ihrer Vorderseite eine konischen Bohrung 13 auf, die geeignet ist, ein Bearbeitungswerkzeug 14, z.B. ein zylinderfoermiges Fraeswerkzeug aufzunehmen.

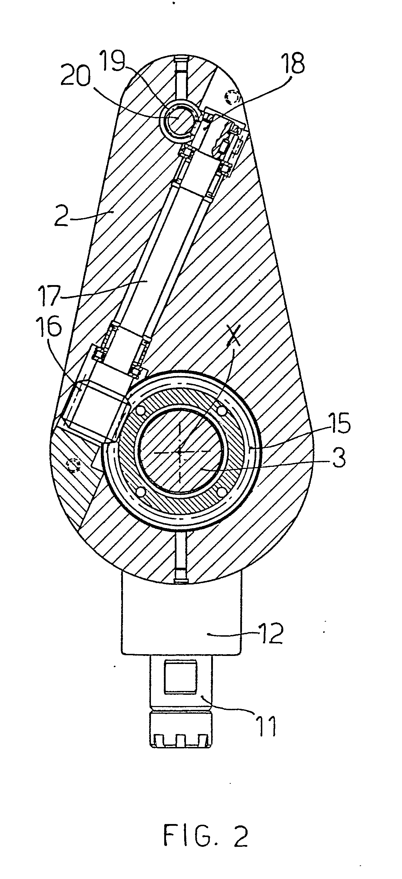

Zur besseren Darstellung wurde in den Figuren 1 und 2 leidiglich eine Welle 11 dargestellt, doch kann das drehbare Teil 7 des Gehaeuses auch mit mehreren radialen Buenden 12 versehen sein, die z.B. in Umfangsrichtung angeordnet sind und im Winkel gegenueber der Achse X versetzt vorgesehen sind, um ueber mehrere Spindeln 11 zu verfuegen, die geeignet sind, unterschiedliche Bearbeitungswerkzeuge aufzunehmen, z.B. Zentrierbohrer, Spiralbohrer, Senker und Gewindeschneidwerkzeuge.

So koennen z.B. Bohr- und Fraeskoepfe mit zwei Werkzeugen vorgesehen sein. In diesem Fall, sind die Spindeln 11 winkelmaessig um 180° gegeneinander versetzt oder aber es werden drei Spindeln oder auch vier Spindeln 11 vorgesehen, die winkelmaessig um 120° bzw. um 90° versetzt angeordnet sind.

Mit dem drehbaren Gehaeuseteil 7 steht ein Zahnkranz 15 in Wirkverbindung, der in einer Kammer 35 des festangeordneten Gehaeuseteiles 2 angeordnet ist.

Dieser Zahnkranz 15 kann eine freie Drehbewegung um die Antriebswelle 3 durchfuehren und ist wirkverbunden mit einer Gewindespindel 16 (Figur 2), die Bestandteil einer Welle 17 ist, die das feststehende Gehaeuseteil 2 durchdringt und mit ihrem anderen Ende ueber ein Zahnrad 18 (Figur 2) mit einer Gewindespindel 19 in Wirkverbindung steht, die mit einer Antriebswelle 20 verbunden ist, die parallel zur Welle 3 angeordnet ist und ein profiliertes Kopfstueck 21 aufweist, das mit einem entsprechend geformten Sitz 22 einer Spindel 23 verbindbar ist, der im Gehaeuse der Werkzeugmaschine (nicht dargestellt) angeordnet ist, und mit einem steuerbaren Antriebsmotor 24 in Wirkverbindung steht, der unter Zwischenschaltung bekannter Mittel z.B. eines Encoders und/oder eines Resolvers 25, ueber die zentrale NC-Steuereinheit der Werkzeugmaschine antreibbar und steuerbar ist. Steuereinrichtungen dieser Art wurden bereits in der europeaischen Patentanmeldung 81110270.6 der Anmelderin beschrieben, beziehen sich jeoch in diesem Fall auf einen Ausdreh- und Plandrehkopf.

Um zu gewaehrleisten, dass sich das profilierte Kopfstueck 21 der Antriebswelle 20 stets in einer Kupplungsstellung befindet, in der ein Zusammenfuegen mit dem Sitz 22 des Verbindungsstueckes 23 moeglich ist, ist in vorteihafter Weise vorgesehen, dass der profilierte Kopf 21 eine kleine Laengsnut 27 aufweist, mit der ein Anschlagstift 28 in Wirkverbindung tritt, der mit einem Stift 29 zusammenarbeitet, der gegen die Kraft einer Feder 30 waehrend des Zusammenfuegens mit dem Verbindungsstueck 23 verschiebbar ist und einen Sitz 40 aufweist, mit der eine federbelastete Kugel 41 in Wirkverbindung tritt.

Die Arbeitsweise des erfindungsgemaessen Bohr- und Fraeskopfes ist folgende:

Nach Entnahme des Werkzeuges 1 aus dem Magazin der Werkzeugmaschine und, nach Einfuehren des Konus 4 der Welle 3 in die konische Ausnehmung der Werkzeugmaschinenspindel, wird gleichzeitig eine Wirkverbindung zwischem dem profilierten Kopf 21 der Welle 20 mit dem Kopf 23 hergestellt. Mit der Welle 3 wird im Anschluss eine Drehbewegung an die Spindel 11 bzw. an die Spindeln 11 uebertragen und somit werden die entsprechenden Werkzeuge 14 in Drehbewegung versetzt.

Zum winkelgerechten Ausrichten der Werkzeuge 14 um die Achse X, ist es ausreichend, ueber den steuerbaren Motor 24 dem Bohr- und Fraeskopf 23 und somit der Welle 20 eine Drehbewegung zu verleihen, die ueber die Gewindespindel 19 das Zahnrad 18, die Zwischenwelle 17, die Gewindespindel 16, sowie den Zahnkranz 15 dem drehbaren Teilstueck 7 des Gehaeuses eine Drehbewegung verleiht.

Somit ist es moeglich, den Werkzeugen 14 eine gesteuerte Drehbewegung um die Achse X der Welle 3 zu verleihen, oder es besteht die Moeglichkeit, eine genaue Winkelpositionierung der Werkzeuge 14 um die Achse X vorzunehmen, wobei diese Positionierung ueber den Motor 24 erfolgt und ueber bekannte Messmittel 25, die mit der NC-Einheit 26 in Wirkverbindung stehen, festgehalten wird.

Mit dem erfindungsgemaessen Bohr- und Fraeskopf wird der Vorteil erzielt, dass in einer numerisch gesteuerten Fraesmaschine, die mit einem, zahlreiche Werkzeuge aufnehmenden Werkzeugmagazin ausgeruestet ist, es zum ersten Mal moeglich wird, mit einer einzigen Aufspannung des Werkstueckes auch jene spanabhebenden Arbeitsgaenge durchzufuehren, die bisher die Verwendung einer zweiten Werkzeugmaschine unumgaenglich machten, d.h. eine zweite Aufspannung des Werkstueckes erforderlich machten. Besonders wird es mit der Erfindung moeglich, Arbeiten in verschiedenen Winkellagen oder sich staendig veraendernden Winkellagen durchzufuehren, so z.B. Bohrungen, Ausdrehungen, Gewindeschneiden im Inneren und am aeusseren Umfang von zylinderfoermigen Werkstuecken, sowie die Ausfuehrung von Nuten, die im Inneren oder am aeusseren Umfang dieser zylinderfoermigen Werkstuecke vorzusehen sind, z.B. Umfangsnuten im Inneren des Werkstueckes, Hinterschneidungen, Schmiernuten und aehnliches.

## Patentansprueche

1. Bohr- und Fraeskopf fuer eine Werkzeugmaschine, die mit einer NC-Steuereinheit, sowie einem Werkzeugmagazin ausgeruestet ist, dadurch gekennzeichnet, dass eine erste fest angeordnete Haelfte (2) des Gehaeuses (1) eine Antriebsspindel (3) aufweist, die mit der Antriebsspindel der Werkzeugmaschine zusammenfuegbar (4) ist, dass ein Endstueck der Antriebsspindel (3) eine Verlaengerung aufweist, die sich in ein zweites Gehaeuseteil (7) verlaengert, welches gegenueber dem festen Teil (2) des Gehaeuses (1) drehbar angeordnet ist und, dass die Antriebsspindel ueber Kegelzahnraeder (9, 10) mit einer oder mehreren Werkzeugspindeln (11) in Wirkverbindung steht, die im drehbaren Teil (7) des Bohr- und Fraeskopfes angeordnet sind, dass diese Spindeln (11) im Winkel zur Achse (X) der Antriebsspindel (3) angeordnet sind und, dass ferner das drehbare Gehaeuse (7) mit einem Antriebsrad (15) wirkverbunden ist, das ueber eine Zwischenwelle (17) mit einer Steuerspindel (20, 21) wirkverbunden ist, die mit einer Antriebs- und Steuervorrichtung (22, 23, 24, 25) verbindbar ist, die von der NC-Steuereinheit (26) der Werkzeugmaschine ueberwacht wird.

2. Bohr- und Fraeskopf, nach Patentanspruch 1, dadurch gekennzeichnet, dass zwischen dem fest angeordneten Teil (2) des Gehaeuses (1) und dem beweglichen Teil (7) des Gehaeuses (1) eine Gleitschicht (6) aus Lagermetall vorgesehen ist.

3. Bohr- und Fraeskopf, nach Patentanspruch 1, dadurch gekennzeichnet, dass das bewegliche Teilstueck (7) des Gehaeuses (1) eine Kammer (8) aufweist, in die ein Ende der Hauptantriebsspindel (3) ragt, und ein Kegelzahnrad (9) aufnimmt, das mit einem oder mehreren Kegelzahnraedern (10) in Wirkverbindung steht, die mit einer oder mehreren Werkzeugspindeln (11) verbunden sind.

4. Bohr- und Fraeskopf, nach Patentanspruch 1 und 3, **dadurch gekennzeichnet**, dass jede Werkzeugpsindel (11) in einem verdickten Bund (12) gelagert ist, der radial vom drehbaren Gehaeuseteil (7) absteht.

5. Bohr- und Fraeskopf, nach Patentanspruch 1, **dadurch gekennzeichnet**, dass die Achse (Y) jeder Werkzeugspindel (11) im Winkel zur Achse (X) der Hauptspindel (3) angeordnet ist.

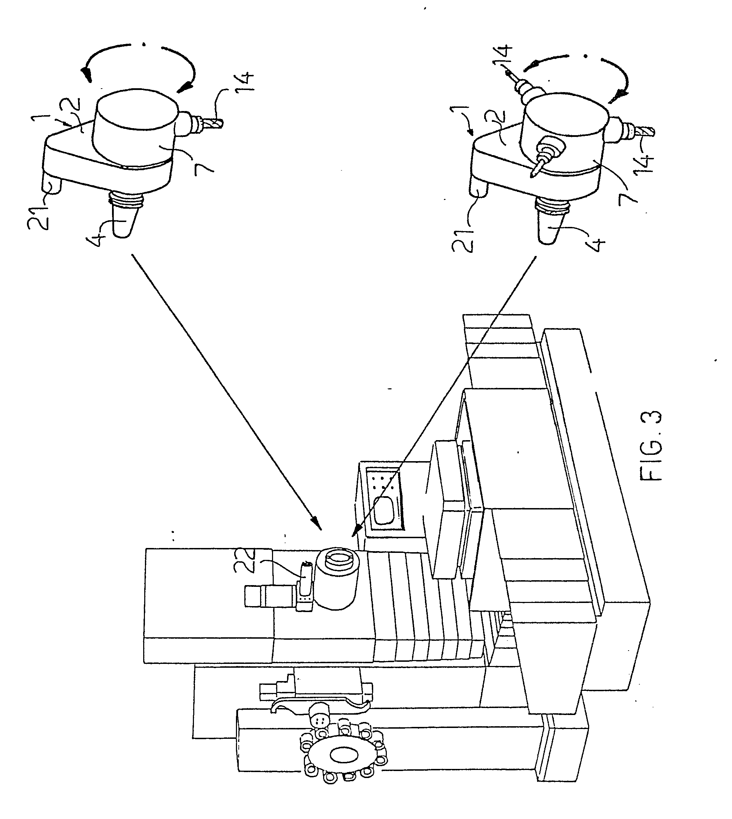

6. Bohr- und Fraeskopf, nach Patentanspruch 1, **dadurch gekennzeichnet**, dass mehrere, in Umfangsrichtung zur Achse (X) der Spindel (3) im Winkel versetzt angeordnete Werkzeugspindeln (11) vorgesehen sind (Fig. 3).

FIG.1

FIG. 2

FIG. 3

0158182